# EUROPEAN PATENT SPECIFICATION

(11) **EP 4 241 486 B1**
(45) Date of publication and mention of the grant of the patent: **06.05.2026**
(21) Application number: 21893041.0
(22) Date of filing: 02.12.2021
(51) Int. Cl.: H04L 65/1016, H04L 65/1073, H04W 36/00, H04W 48/16, H04W 88/06, H04W 8/18, H04W 36/14, H04W 48/02, H04W 48/18

(54) **SELECTIVE DEVICE SWITCHING OF FIFTH GENERATION (5G) MODE**
SELEKTIVE VORRICHTUNGSUMSCHALTUNG IM MODUS DER FÜNFTEN GENERATION (5G)
COMMUTATION SÉLECTIVE D'UN MODE CINQUIÈME GÉNÉRATION (5G) D'UN DISPOSITIF

(30) Priority: 02.12.2020 US 202063120627 P
(43) Date of publication of application: 13.09.2023
(73) Proprietor: Innopeak Technology, Inc., Palo Alto, CA 94303 (US)
(72) Inventor: YANG, Jaehyeuk, Palo Alto, CA 94303 (US); XU, Xin, Palo Alto, CA 94303 (US); SHI, Yongsheng, Palo Alto, CA 94303 (US)
(74) Representative: Taor, Simon Edward William
(86) International application number: PCT/US2021/061662
(87) International publication number: WO 2022/104291

(56) References cited:
- EP-A1- 3 800 935
- CN-A- 111 372 327
- CN-A- 112 020 111
- US-A1- 2016 174 191
- US-A1- 2018 132 141
- US-A1- 2019 116 506
- US-A1- 2019 357 037
- US-A1- 2020 008 167
- US-A1- 2020 100 309
- US-A1- 2020 275 259
- US-A1- 2020 275 259
- US-A1- 2020 344 630
- US-A1- 2023 086 087
- US-B2- 10 567 943

## Description

### Background

A first release of a 5G (fifth-generation) standard, 5G New Radio (NR), was completed in mid-2018 and defined some of the physical layer 5G specifications. 5G NR leverages some features of the existing 4G (fourth-generation) LTE (Long Term Evolution) core network. Similar to LTE, NR relies on an IMS (Internet Protocol Multimedia Subsystem) platform which utilizes RTP (Real Time Protocol) to carry multimedia signals such as audio and video. Compared to the previous generation standard, 5G improves technical aspects, including increasing frequency range 1 (FR1), increasing frequency range 2 (FR2), also known as mmWave, increasing channel bandwidths for a single component carrier (CC), increasing a maximum number of permitted component carriers, increasing subcarrier spacing, increasing slot length, reducing latency, and deploying a common modulation scheme for both uplink and downlink. However, one drawback that may occur is call dropping during an attempted handover from a Voice Over LTE (VoLTE) or Voice over Wireless Fidelity (VoWiFi) to 5G NR. The call dropping may be attributed at least in part to dropping of RTP packets. For example, US patent publication No. 2020344630A1 discloses a method for managing new radio (NR) communication in an electronic device, including receiving, from a base station, configuration information for an event B1-NR measurement, indicating a trigger threshold value for triggering the electronic device to transmit a B1-NR measurement report, periodically monitoring at least one condition of the electronic device, upon receiving the configuration information, and restricting at least one of NR capability and NR measurements of the electronic device, when the monitored at least one condition of the electronic device is satisfied.

### Summary

The invention is defined by the claims.

A first aspect of the invention comprises a computing system - implemented method as set forth in claim 1.

A second aspect of the invention comprises a computing system as set forth in claim 9.

A third aspect of the invention comprises a non-transitory storage medium as set forth in claim 12. Some preferred embodiments are defined in the dependent claims.

Various examples of the present disclosure can include computing systems, methods, and non-transitory computer readable media configured to execute instructions that, when executed by one or more processors, cause a computing system to determine a status of an Internet Protocol Multimedia Subsystem, IMS, registration on a device, determine an extent of cellular coverage for the device, and selectively disable a 5G mode of the device based on the status of the IMS registration or the extent of cellular coverage. Thereby, the determining the extent of cellular coverage for the device comprises determining whether or not cellular data is disabled, or determining whether or not Voice over New Radio, VoNR, or Video over New Radio, ViNR, is supported in cellular coverage.. The instructions that, when executed by one or more processors, further cause the computing system to selectively enable the 5G mode in response to: 1) a level of battery on the device being above a threshold or 2) WiFi being unavailable while cellular data is on, and any of 1) the device being in an idle mode, 2) a screen of the device being off, 3) a LTE System Information Block 24, SIB24, being present, and 4) the device refraining from foreground scanning of 5G cells while enabling the 5G mode.

In some examples, the 5G mode of the device includes a 5G New Radio Standalone, NR SA, mode.

In some examples, the selective disabling includes disabling the 5G mode of the device in response to a Wi-Fi connection on the device being available and the IMS being registered over a wireless network.

In some examples, the selective disabling includes disabling the 5G mode in response to the cellular coverage being disabled and Voice over New Radio, VoNR, or Video over New Radio, ViNR, being unsupported on the device or on a network through which the device exchanges data.

In some examples, the selective disabling includes disabling the 5G mode in response to the IMS being registered over WiFi and the device currently participating in an active call session over a wireless network.

In some examples, the selective disabling includes disabling the 5G mode in response to the device currently participating in an active call session, via Voice Over WiFi, VoWiFi; and the VoWiFi session being handed over to a LTE mode.

In some examples, the selective disabling includes disabling the 5G mode in response to the device currently participating in an active call session, via VoWiFi) or via Voice Over LTE, VoLTE; and VoNR being unsupported by the cellular coverage.

In some examples, the instructions that, when executed by one or more processors, further cause the computing system to determine a presence of the active call session based on an IMS call setup being in progress.

In some examples, the device being in an idle mode is determined in response to a Radio Resource Control, RRC, connection being released by the LTE network.

These and other features of the computing systems, methods, and non- transitory computer readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as a definition of the limits of the invention.

### Brief Description of the Drawings

The present disclosure, in accordance with one or more various examples, is described in detail with reference to the following figures. The figures are provided for purposes of illustration only and merely depict typical or example examples. These illustrative examples are mentioned not to limit or define the disclosure, but to provide examples to aid understanding thereof. Additional examples are discussed in the Detailed Description, and further description is provided there.
**FIG.** 1 is an exemplary illustration of a computing system, within or otherwise associated with a device, that selectively disables and enables 5G NR SA, according to examples described in the present disclosure.
**FIGS. 2-3** illustrate scenarios of selectively disabling 5G NR SA, for example, in order to conserve power consumption of a device.
**FIGS. 4-5** illustrate scenarios of selectively disabling 5G NR SA, for example, in order to mitigate or eliminate call dropping of a device.
**FIG. 6** is an exemplary flowchart, illustrating how a computing component obtains and processes information, and performs prediction or troubleshooting, according to examples described in the present disclosure.
**FIG. 7** is an example computing component that may be used to implement various features of examples described in the present disclosure.

The figures are not exhaustive and do not limit the present disclosure to the precise form disclosed.

### Detailed Description

5G has brought forth a improvements and benefits compared to previous versions or modes such as 4G. However, due to some features of voice over NR being unsupported by a 5G network in early phases of 5G deployment, calls may occasionally drop during an attempted handover from a Voice Over LTE (VoLTE) or Voice Over WiFi (VoWiFi) call to 5G NR, attributed at least in part on dropping of RTP packets. In an attempt to mitigate or eliminate such call dropping, certain 5G NR modes, such as 5G NR Stand-Alone (SA) mode, may be disabled under certain scenarios of calls, which may include voice calls and/or video calls and/or involve exchange of multimedia (e.g., text, audio, and video) data. The disabling of 5G NR SA mode may avoid attempted handover to 5G NR. 5G NR SA may refer to services that may operate independently without an existing 4G LTE or 4G radio and Evolved Packet Core (EPC) infrastructure Core Network or 4G core. 5G NR SA may be differentiated from 5G NR Non-Standalone (NSA) mode, which anchors control signaling of 5G radio networks to the existing 4G infrastructure, and supports a more limited range of services compared to 5G SA. Additionally, because 5G SA mode entails a higher power consumption compared to other earlier modes such as 4G LTE, the selective disabling of 5G NR modes may prolong battery life of devices.

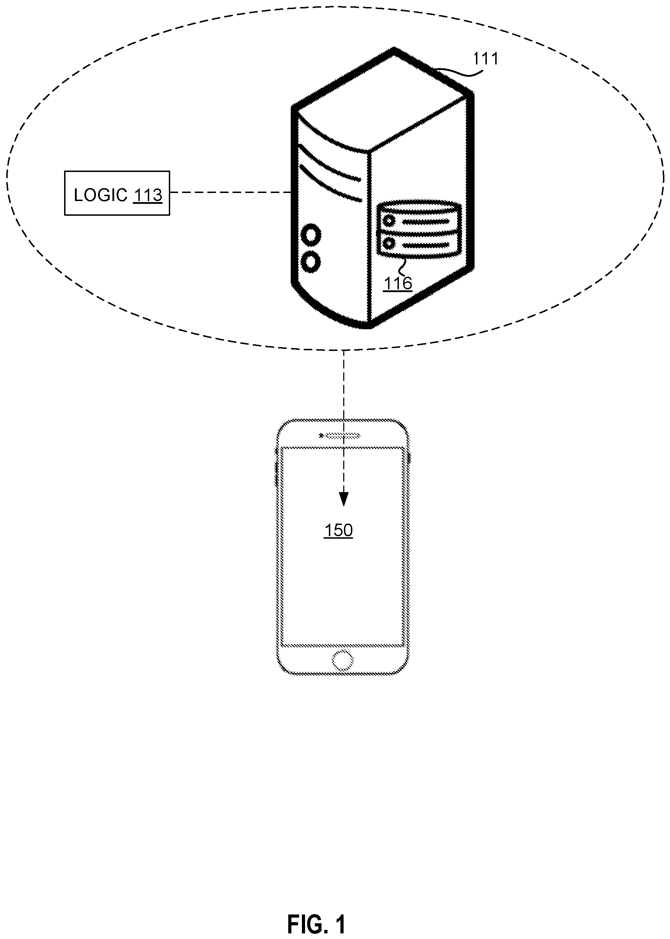

Examples described herein address these challenges of increased battery consumption and higher frequency of call dropping in 5G while still selectively implementing, or enabling, 5G in certain scenarios in which benefits may outweigh the aforementioned detriments of increased battery consumption and higher frequency of call dropping. The examples implement a computing component within a device that selectively disables, within the device, one or more communication modes, such as 5G NR SA, under certain conditions or scenarios. **FIG. 1** is an exemplary illustration of such a computing component 111 which may be internal to or otherwise associated within a device 150. In some examples, the device 150 may include, but is not limited to, a mobile phone, smartphone, tablet, personal digital assistant (PDA), desktop, or laptop. The computing component 111 may control, coordinate, or determine (hereinafter "determine") a particular mode and/or handoffs or transitions between different modes by which the device 150 communicates with one or more other devices. These modes may encompass, as non-limiting examples, 4G modes, 5G modes, and/or 6G (sixth-generation) modes. The computing component 111 may include one or more hardware processors and logic 113 that implements instructions to carry out the functions of the computing component 111, for example, selectively disabling or prohibiting certain modes, transitions between different modes, and/or selective enabling certain modes. The computing component 111 may store, in a database 112, details regarding scenarios or conditions in which certain modes are to be disabled or certain transitions or handovers are to be prohibited or blocked. Some of the particular scenarios or conditions will be illustrated in the subsequent **FIGS.**

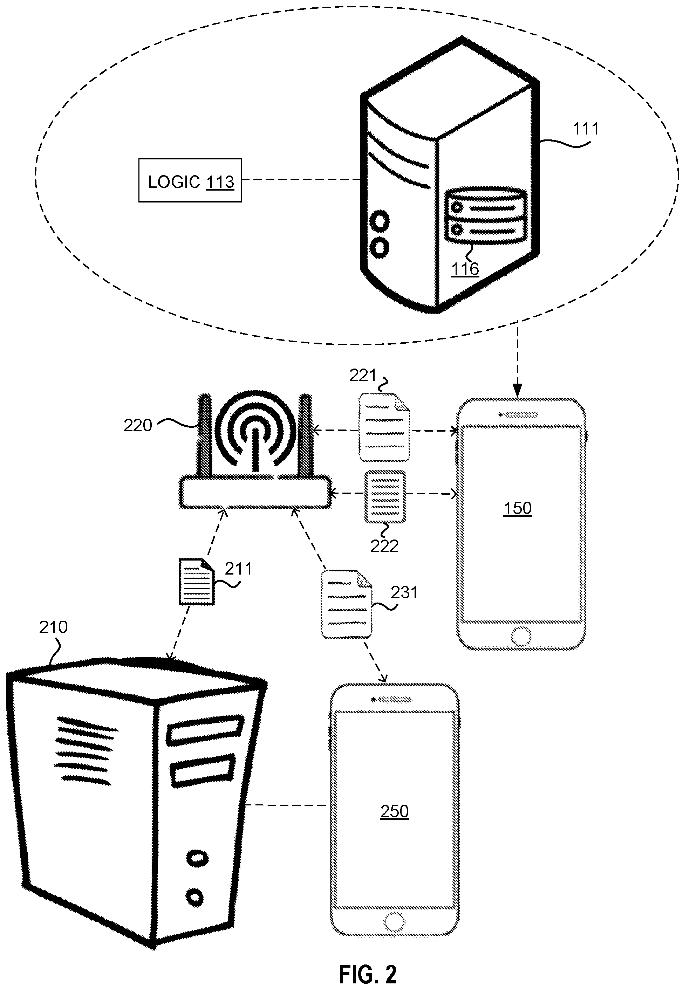

**FIGS. 2-3** illustrate scenarios in which the computing component 111 may selectively disable 5G NR SA, for example, in order to conserve power consumption of the device 150. In particular, when or if wireless connectivity, such as Wi-Fi, is available, the device 150 may obtain data and/or Internet access via a network such as a wireless local area network (WLAN). For example, in **FIG. 2****,** the connection to the network may be established, via a network device 220 or one or more network devices, to a network, or connected in an ad-hoc fashion without a network device. The network device 220 may include an access point, router, switch, and/or gateway. Additionally, the transmission of signals such as audio or video signals may be conducted through IMS, which may be registered over the wireless network, for example, WLAN. In some examples, the wireless connectivity being available may encompass a wireless signal strength satisfying a threshold, a stability of the wireless signal satisfying a threshold, and/or other parameters of the wireless network satisfying a threshold, such as a packet or frame drop rate being below a threshold, a transmission rate of packets or frames exceeding a threshold, a packet or frame size satisfying a threshold or range, and/or a consistency of a packet or frame size, as manifested by a standard deviation of the packet or frame size. As an example, a threshold signal strength may be negative 70 decibel milliwatts (dBm). Thus, a signal strength of greater or better than negative 70 dBm may constitute wireless connectivity being available. As another example, if a frame or packet drop rate is less than 1%, then the wireless connectivity may be construed as being available.

Because no PDU (Protocol Data Unit) session, which otherwise establishes connectivity over 5G, would be connected over NR, a call (e.g., voice call or video call) would be in a format of a VoWiFi (Voice Over WiFi) or Video Over WiFi call. For example, as illustrated in **FIG. 2****,** the device 150 may transmit one or more packets 211 to a computing component 210 for setup and teardown. Setup may encompass establishing a call session with a device 250. The device 210 may include a server, switch, or gateway. The protocols for setup and/or teardown may include a Simple Gateway Control Protocol (SGCP), Media Gateway Control Protocol (MGCP), and Session Initiation Protocol (SIP). Once setup is completed, the device 150 may exchange one or more digital voice packets or other data packets 221 and/or 231 with the device 250 during a call session. The digital voice packets 221 and/or 231 may be encapsulated using a RTP (Real-Time Transport Protocol), UDP (User Datagram Protocol), and IP (Internet Protocol), and may include respective headers, such as data link layer headers. Additionally, the device 150 may exchange non-voice packets 222 via the WLAN through the network device 220. The non-voice packets 222 may not be exchanged with the device 250 and may encompass, for example, other data requested by the network device 220.

Therefore, the computing component 111 may disable 5G NR SA in response to the aforementioned conditions being satisfied, in particular, that wireless connectivity is available and IMS, utilized to deliver multimedia communications such as voice, video, and text, is registered over a wireless network. In such a manner, the computing component 111 may conserve battery power and power consumption of the device 150 because even a successful handoff to a 5G NR SA mode may have at most negligible benefits that would not likely outweigh the consumption of battery power.

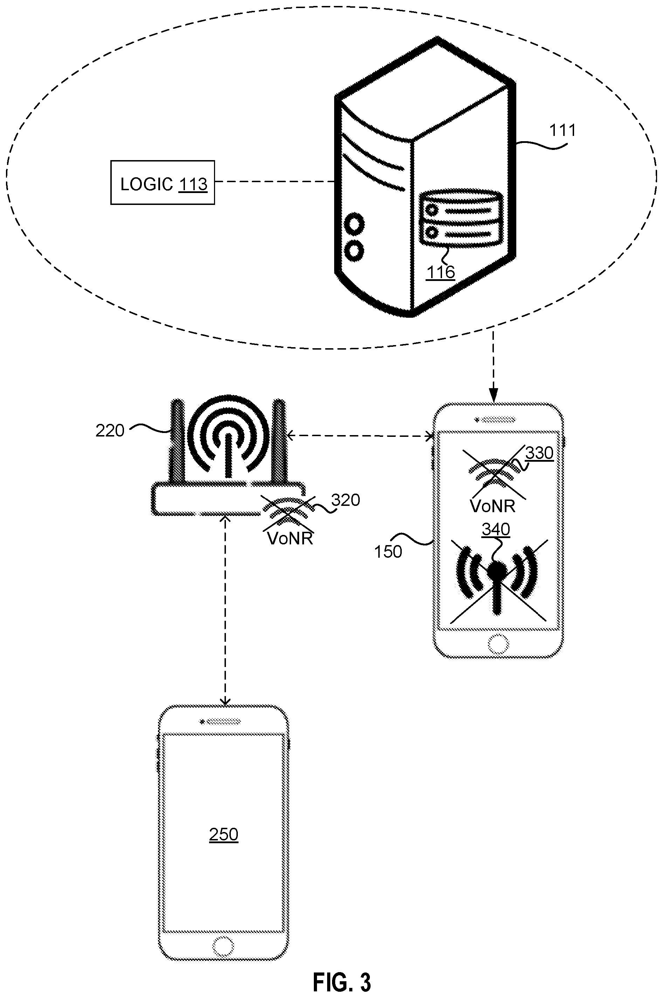

In another scenario, as illustrated in **FIG. 3****,** if mobile cellular data 340 is disabled on the device 150, and VoNR (Voice Over New Radio) 330 (or alternatively, ViNR (Video Over New Radio) on the device 150 and/or VoNR 320 (or alternatively, ViNR) on the wireless network, through which the device 150 may exchange data, is unsupported, the computing component 111 may disable 5G NR SA, to prevent possible unsuccessful attempts to handoff from an existing mode to 5G NR SA.

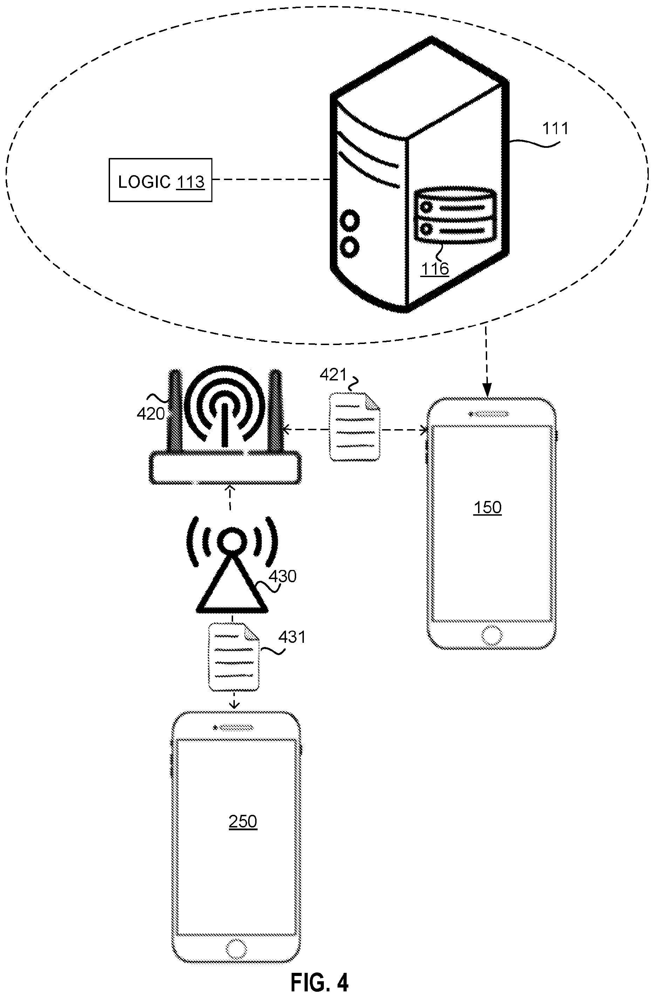

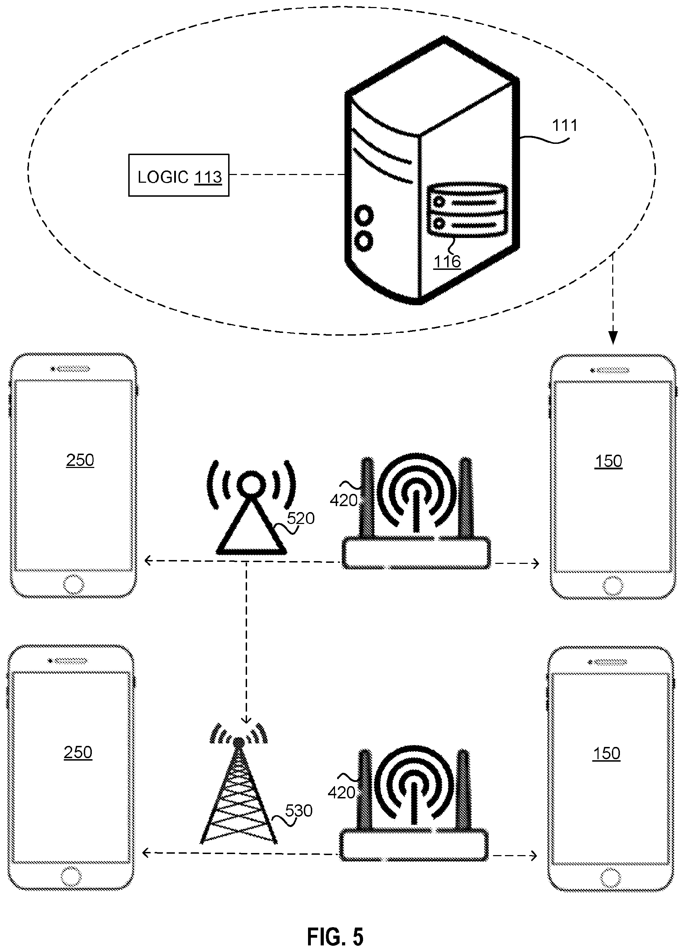

**FIGS. 4-5** illustrate another set of example scenarios in which 5G NR SA is disabled in order to avoid call drops. In **FIG. 4****,** IMS is registered over WiFi and the device 150 is initiating a session or a call (e.g., a voice call or a video call) over the WLAN, with the device 250, via a network device 420, such as an access point, of a WLAN. In particular, the device 150 may be exchanging audio, voice, and/or other data packets 421 and 431 with the device 250 over the WLAN, via VoWiFi 430. The computing component 111 may disable 5G NR SA to facilitate a smooth transition between WiFi and LTE, as the device 150 and/or the network do not have VoNR capabilities. In **FIG. 5****,** in another scenario, during a transition or handover between a VoWiFi mode 520 to a LTE mode 530, the computing component 111 may disable 5G NR SA on the device 150 during an active session in which a voice call between the device 150 and the device 250 is ongoing.

In some examples, the computing component 111 may block or prohibit handover to 5G NR SA, and/or disable 5G NR SA, if any of the following conditions are satisfied: 1) when a VoLTE (Voice Over LTE) session or alternatively, a ViLTE (Video Over LTE) or call is active and VoNR is unsupported by cellular coverage; or 2) when a VoWiFi session or call is active and VoNR (or alternatively, ViNR) is unsupported by cellular coverage. In particular, a session or call may be considered as active if an IMS call setup is in progress. In some examples described in **FIGS. 2-****5,** the selective disabling may apply to 5G NR SA, but may not also apply to other modes such as 5G NR NSA (Non-Standalone).

The computing component 11 enables 5G NR SA under certain conditions. The selective enablement of 5G NR SA may not also apply to other modes such as 5G NR NSA. For example, pertaining to the scenarios illustrated in **FIGS. 2-3****,** 5G NR SA is enabled when the following conditions are met: 1) a level of battery power is above a certain threshold, such as 30%; and/or 2) WiFi is unavailable and cellular data is on. Furthermore, one of the following additional conditions are to be met: 1) the device 150 is in an idle mode; 2) a screen of the device 150 is off; 3) a LTE cell with SIB24 (System Information Block 24) is present; and/or 4) refraining from or avoiding foreground scanning of 5G. Thus, in a situation where the battery power is initially below a certain threshold, but the battery is charging during an active call and the battery power increases to above the certain threshold, the computing component 111 still would not enable 5G NR SA. Because 5G radios may be relatively power hungry compared to 4G radios, switching to 5G NR SA when a level of battery is below a certain threshold may be more likely to deplete the battery and/or compromise battery life.

Regarding the first additional condition of the device 150 being idle, ensuring that the device 150 is in an idle mode may avoid impacts to ongoing circuit switching or packet switching of calls or SMS (Short Message Service) or signaling transactions. One way to determine that the device 150 is idle is determining or detecting that a RRC (Radio Resource Control) connection, in LTE, of the device 150 has been released by the wireless network. The computing component 111 may enable a 5G NR SA mode only when the computing component 111 detects or receives an indication of an available 5G cell, to conserve time and resources that would otherwise be separately diverted to scanning of 5G cells. Regarding the second additional condition of the screen being off, ensuring that the screen of the device 150 is off may avoid any user interface status changes caused by 5G enabling. Regarding the third additional condition of the LTE cell with SIB24 being present, the SIB24 may provide information for cell access parameters and/or attributes so that the device 150 may select the cell. The SIB24 may indicate the presence of 5G NR SA neighbor cells available, so that the device 150 does not need to separately scan for 5G NR SA neighbor cells. Regarding the fourth additional condition of avoiding foreground scanning of 5G, the foreground scanning may interrupt services of the device 150, such as packet switching. Therefore, the device 150 may remain on a current Radio Access Technology (RAT) in an uninterrupted manner while adding a capability of 5G NR SA. The device 150 may transition or handover to 5G NR SA at a time that would avoid interruptions of services on the device 150. For example, the computing component 111 may determine a time at which relatively fewer services are operating either in a foreground and/or background status, fewer services are operating compared to a threshold, and/or fewer services would be affected by a transition or handover to 5G NR SA, and transition or handover to 5G NR SA at that time.

As a result of enforcing or implementing the following conditions, the computing component 111 may mitigate or eliminate the problems of dropped calls while avoiding service interruptions during enabling of 5G NR, and decreasing setup time associated with 5G SA, while streamlining or increasing efficiency of power consumption of the device 150.

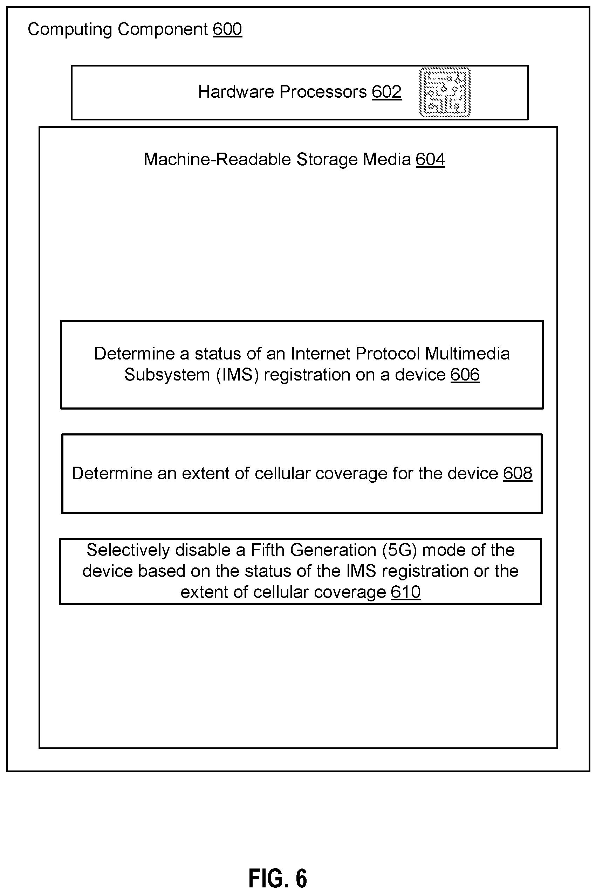

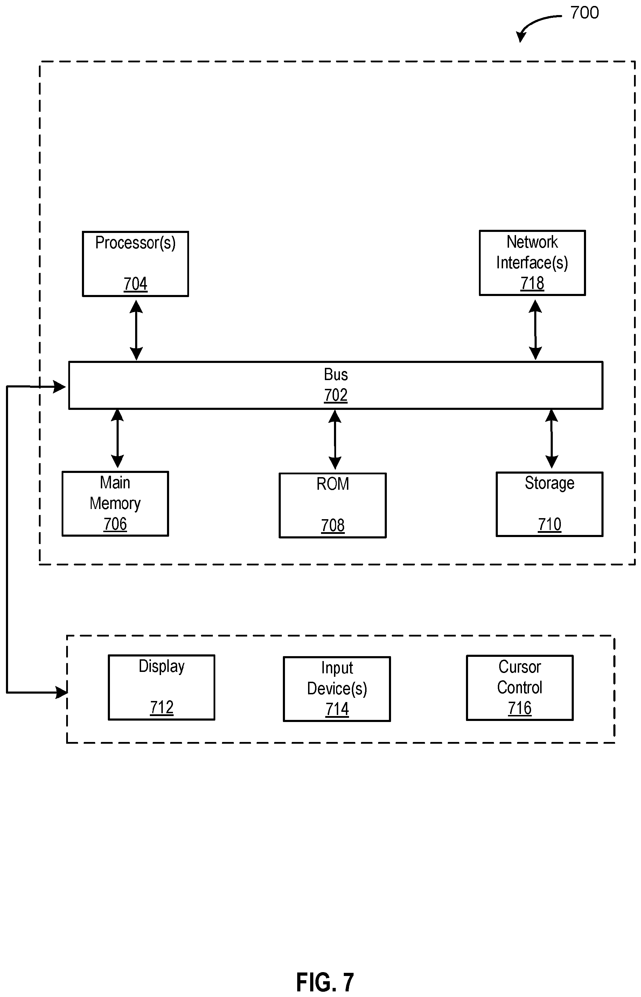

**FIG. 6** illustrates a computing component 600 that includes one or more hardware processors 602 and machine-readable storage media 604 storing a set of machine-readable/machine-executable instructions that, when executed, cause the hardware processor(s) 602 to perform an illustrative method of mitigating or eliminating dropped calls during handovers of modes on devices. It should be appreciated that there can be additional, fewer, or alternative steps performed in similar or alternative orders, or in parallel, within the scope of the various examples discussed herein unless otherwise stated. The computing component 600 may be implemented as the computing component 111 of **FIGS. 1-5****.** The computing component 600 may include a server. The machine-readable storage media 604 may include suitable machine-readable storage media described in **FIG. 7****.** **FIG. 6** summarizes and further elaborates on some aspects previously described.

At step 606, the hardware processor(s) 602 may execute machine-readable/machine-executable instructions stored in the machine-readable storage media 604 to determine a status of an Internet Protocol Multimedia Subsystem (IMS) registration on a device (e.g., device 150 as illustrated in **FIGS. 1-5****).** For example, the status of the IMS registration may include, whether the IMS is registered over a wireless network such as a WLAN, as described with respect to **FIG. 2****.** In addition, a status of the IMS registration may include, whether the IMS is registered over WiFi, as described with respect to **FIG. 4****.** Additionally, with respect to **FIG. 5****,** the status of the IMS registration may indicate whether a IMS call setup is in progress, which may determine whether a call (e.g., a voice call or a video call) is in an active status.

At step 608, the hardware processor(s) 602 may execute machine-readable/machine-executable instructions stored in the machine-readable storage media 604 to determine an extent of cellular coverage for the device. For example, the extent of cellular coverage for the device may include whether or not cellular data is disabled, as described with respect to **FIG. 3****.** As another example, the extent of cellular coverage for the device may indicate whether or not VoNR or ViNR is supported in cellular coverage, as described with respect to **FIG. 5****.**

At step 610, the hardware processor(s) 602 may execute machine-readable/machine-executable instructions stored in the machine-readable storage media 604 to selectively disable a Fifth Generation (5G) mode of the device based on the status of the IMS registration or the extent of cellular coverage. The 5G mode may include a 5G NR SA mode, but may not include other 5G modes such as 5G NR NSA. As an example, as illustrated with respect to **FIG. 2****,** in response to the IMS being registered over a wireless network such as a WLAN and WiFi connectivity being available, the hardware processor(s) 602 may disable the 5G mode of the device. As another example, in **FIG. 3****,** in response to the cellular data being disabled and VoNR or ViNR being unsupported on the device and by a wireless network over which the device communicates, the hardware processor(s) 602 may disable the 5G mode of the device. As another example, in **FIG. 4****,** in response to the IMS being registered over WiFi and a current call session being active over a wireless network such as a WLAN, the hardware processor(s) 602 may disable the 5G mode of the device. As another example, in **FIG. 5****,** in response to a VoWiFi call or ViWiFi handover of the device to a LTE mode, the 5G mode may be disabled or maintained in a disabled status by the hardware processor(s) 602. As another example, when the VoNR or ViNR is unsupported in cellular coverage, and either a VoLTE or ViLTE call, a VoWiFi call or a Video over WiFi is active, then the 5G mode may be disabled or maintained in a disabled status by the hardware processor(s) 602, and/or a handover to the 5G mode may be blocked or prohibited.

**FIG. 7** depicts a block diagram of an example computer system 700 in which various of the examples described herein may be implemented. The computer system 700 includes a bus 702 or other communication mechanism for communicating information, one or more hardware processors 704 coupled with bus 702 for processing information. Hardware processor(s) 704 may be, for example, one or more general purpose microprocessors.

The computer system 700 also includes a main memory 706, such as a random access memory (RAM), cache and/or other dynamic storage devices, coupled to bus 702 for storing information and instructions to be executed by processor 704. Main memory 706 also may be used for storing temporary variables or other intermediate information during execution of instructions to be executed by processor 704. Such instructions, when stored in storage media accessible to processor 704, render computer system 700 into a special-purpose machine that is customized to perform the operations specified in the instructions.

The computer system 700 further includes a read only memory (ROM) 708 or other static storage device coupled to bus 702 for storing static information and instructions for processor 704. A storage device 710, such as a magnetic disk, optical disk, or USB thumb drive (Flash drive), etc., is provided and coupled to bus 702 for storing information and instructions.

The computer system 700 may be coupled via bus 702 to a display 712, such as a liquid crystal display (LCD) (or touch screen), for displaying information to a computer user. An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. In some examples, the same direction information and command selections as cursor control may be implemented via receiving touches on a touch screen without a cursor.

The computing system 700 may include a user interface module to implement a GUI that may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "component," "system," "component," "database," data store," and the like, as used herein, can refer to logic embodied in hardware or firmware, or to a collection of software instructions, possibly having entry and exit points, written in a programming language, such as, for example, Java, C or C++. A software component may be compiled and linked into an executable program, installed in a dynamic link library, or may be written in an interpreted programming language such as, for example, BASIC, Perl, or Python. It will be appreciated that software components may be callable from other components or from themselves, and/or may be invoked in response to detected events or interrupts. Software components configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware components may be comprised of connected logic units, such as gates and flip-flops, and/or may be comprised of programmable units, such as programmable gate arrays or processors.

The computer system 700 may implement the techniques described herein using customized hard-wired logic, one or more ASICs or FPGAs, firmware and/or program logic which in combination with the computer system causes or programs computer system 700 to be a special-purpose machine. According to one example, the techniques herein are performed by computer system 700 in response to processor(s) 704 executing one or more sequences of one or more instructions contained in main memory 706. Such instructions may be read into main memory 706 from another storage medium, such as storage device 710. Execution of the sequences of instructions contained in main memory 706 causes processor(s) 704 to perform the process steps described herein. In alternative examples, hard-wired circuitry may be used in place of or in combination with software instructions.

The term "non-transitory media," and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 710. Volatile media includes dynamic memory, such as main memory 706. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

Non-transitory media is distinct from but may be used in conjunction with transmission media. Transmission media participates in transferring information between non-transitory media. For example, transmission media includes coaxial cables, copper wire and fiber optics, including the wires that comprise bus 702. Transmission media can also take the form of acoustic or light waves, such as those generated during radio-wave and infra-red data communications.

The computer system 700 also includes a communication interface 718 coupled to bus 702. Network interface 718 provides a two-way data communication coupling to one or more network links that are connected to one or more local networks. For example, communication interface 718 may be an integrated services digital network (ISDN) card, cable modem, satellite modem, or a modem to provide a data communication connection to a corresponding type of telephone line. As another example, network interface 718 may be a local area network (LAN) card to provide a data communication connection to a compatible LAN (or WAN component to communicated with a WAN). Wireless links may also be implemented. In any such implementation, network interface 718 sends and receives electrical, electromagnetic or optical signals that carry digital data streams representing various types of information.

A network link typically provides data communication through one or more networks to other data devices. For example, a network link may provide a connection through local network to a host computer or to data equipment operated by an Internet Service Provider (ISP). The ISP in turn provides data communication services through the world wide packet data communication network now commonly referred to as the "Internet." Local network and Internet both use electrical, electromagnetic or optical signals that carry digital data streams. The signals through the various networks and the signals on network link and through communication interface 718, which carry the digital data to and from computer system 700, are example forms of transmission media.

The computer system 700 can send messages and receive data, including program code, through the network(s), network link and communication interface 718. In the Internet example, a server might transmit a requested code for an application program through the Internet, the ISP, the local network and the communication interface 718. The received code may be executed by processor 704 as it is received, and/or stored in storage device 710, or other non-volatile storage for later execution.

Each of the processes, methods, and algorithms described in the preceding sections may be embodied in, and fully or partially automated by, code components executed by one or more computer systems or computer processors comprising computer hardware. The one or more computer systems or computer processors may also operate to support performance of the relevant operations in a "cloud computing" environment or as a "software as a service" (SaaS). The processes and algorithms may be implemented partially or wholly in application-specific circuitry. The various features and processes described above may be used independently of one another, or may be combined in various ways. Different combinations and subcombinations are intended to fall within the scope of this disclosure, and certain method or process blocks may be omitted in some implementations. The methods and processes described herein are also not limited to any particular sequence, and the blocks or states relating thereto can be performed in other sequences that are appropriate, or may be performed in parallel, or in some other manner. Blocks or states may be added to or removed from the disclosed example examples. The performance of certain of the operations or processes may be distributed among computer systems or computers processors, not only residing within a single machine, but deployed across a number of machines.

**As** used herein, a circuit might be implemented utilizing any form of hardware, software, or a combination thereof. For example, one or more processors, controllers, ASICs, PLAs, PALs, CPLDs, FPGAs, logical components, software routines or other mechanisms might be implemented to make up a circuit. In implementation, the various circuits described herein might be implemented as discrete circuits or the functions and features described can be shared in part or in total among one or more circuits. Even though various features or elements of functionality may be individually described or claimed as separate circuits, these features and functionality can be shared among one or more common circuits, and such description shall not require or imply that separate circuits are required to implement such features or functionality. Where a circuit is implemented in whole or in part using software, such software can be implemented to operate with a computing or processing system capable of carrying out the functionality described with respect thereto, such as computer system 700.

As used herein, the term "or" may be construed in either an inclusive or exclusive sense. Moreover, the description of resources, operations, or structures in the singular shall not be read to exclude the plural. Conditional language, such as, among others, "can," "could," "might," or "may," unless specifically stated otherwise, or otherwise understood within the context as used, is generally intended to convey that certain examples include, while other examples do not include, certain features, elements and/or steps.

Terms and phrases used in this document, and variations thereof, unless otherwise expressly stated, should be construed as open ended as opposed to limiting. Adjectives such as "conventional," "traditional," "normal," "standard," "known," and terms of similar meaning should not be construed as limiting the item described to a given time period or to an item available as of a given time, but instead should be read to encompass conventional, traditional, normal, or standard technologies that may be available or known now or at any time in the future. The presence of broadening words and phrases such as "one or more," "at least," "but not limited to" or other like phrases in some instances shall not be read to mean that the narrower case is intended or required in instances where such broadening phrases may be absent.

Unless the context requires otherwise, throughout the present specification and claims, the word "comprise" and variations thereof, such as, "comprises" and "comprising" are to be construed in an open, inclusive sense, that is as "including, but not limited to." Recitation of numeric ranges of values throughout the specification is intended to serve as a shorthand notation of referring individually to each separate value falling within the range inclusive of the values defining the range, and each separate value is incorporated in the specification as it were individually recited herein. Additionally, the singular forms "a," "an" and "the" include plural referents unless the context clearly dictates otherwise. The phrases "at least one of," "at least one selected from the group of," or "at least one selected from the group consisting of," and the like are to be interpreted in the disjunctive (e.g., not to be interpreted as at least one of A and at least one of B).

## Claims

1. A computing system-implemented method, the method being executed by a computing system within or associated with a device and comprising:
determining (606) a status of an Internet Protocol Multimedia Subsystem, IMS, registration on the device;
determining (608) an extent of cellular coverage for the device, said determining the extent of cellular coverage for the device comprising: determining whether or not cellular data is disabled, or determining whether or not Voice over New Radio, VoNR, or Video over New Radio, ViNR, is supported in cellular coverage; and
selectively disabling (610) a Fifth Generation, 5G, mode of the device based on the status of the IMS registration or the extent of cellular coverage,
**characterized in that** the computer-implemented method further comprises selectively enabling the 5G mode in response to:
a level of battery on the device being above a threshold, or WiFi being unavailable while cellular data is on; and any of:
the device being in an idle mode;
a screen of the device being off;
an LTE System Information Block 24, SIB24, being present; and
the device refraining from foreground scanning of 5G cells while enabling the 5G mode.

2. The computing system-implemented method of claim 1, wherein the 5G mode of the device comprises a 5G New Radio Standalone, NR SA, mode.

3. The computing system-implemented method of claim 1, wherein the selectively disabling (610) comprises:
disabling the 5G mode of the device in response to a Wireless Fidelity, Wi-Fi, connection on the device being available and the IMS being registered over a wireless network.

4. The computing system-implemented method of claim 1, wherein the selectively disabling (610) comprises:
disabling the 5G mode in response to the cellular coverage being disabled and VoNR or ViNR being unsupported on the device or on a network through which the device exchanges data.

5. The computing system-implemented method of claim 1, wherein the selectively disabling (610) comprises:
disabling the 5G mode in response to the IMS being registered over WiFi and the device currently participating in an active call session over a wireless network.

6. The computing system-implemented method of claim 1, wherein the selectively disabling (610) comprises:
disabling the 5G mode in response to:
the device currently participating in an active call session, via Voice Over WiFi, VoWiFi; and
the VoWiFi session being handed over to a Long-Term Evolution, LTE, mode.

7. The computing system-implemented method of claim 1, wherein the selectively disabling (610) comprises:
disabling the 5G mode in response to:
the device currently participating in an active call session, via VoWiFi or via Voice Over LTE, VoLTE; and
VoNR being unsupported by the cellular coverage,
preferably, the computer-implemented method further comprises determining a presence of the active call session based on an IMS call setup being in progress.

8. The computing system-implemented method of claim 1, wherein the device being in an idle mode is determined in response to a Radio Resource Control, RRC, connection being released by the LTE network.

9. A computing system (600) within or associated with a device, the computing system (600) comprising:
one or more processors (602); and
a memory storing instructions that, when executed by the one or more processors (602), cause the computing system to:
determine a status of an IMS registration on the device;
determine an extent of cellular coverage for the device, said determining the extent of cellular coverage for the device comprising: determining whether or not cellular data is disabled, or determining whether or not VoNR, or ViNR is supported in cellular coverage; and
selectively disable a 5G mode of the device based on the status of the IMS registration or the extent of cellular coverage,
**characterized in that** the instructions, when executed by the one or more processors (602), further cause the computing system to selectively enable the 5G mode in response to:
a level of battery on the device being above a threshold, or
WiFi being unavailable while cellular data is on; and any of:
the device being in an idle mode;
a screen of the device being off;
an LTE SIB24 being present; and
the device refraining from foreground scanning of 5G cells while enabling the 5G mode.

10. The computing system (600) of claim 9, wherein the selectively disabling comprises:
disabling the 5G mode of the device in response to a Wi-Fi connection on the device being available and the IMS being registered over a wireless network.

11. The computing system (600) of claim 9, wherein the selectively disabling comprises:
disabling the 5G mode in response to the cellular coverage being disabled and Voice over VoNR being unsupported on the device or on a network through which the device exchanges data;
disabling the 5G mode in response to the IMS being registered over WiFi and the device currently participating in an active call session over a wireless network;
disabling the 5G mode in response to: the device currently participating in an active call session, via VoWiFi; and the VoWiFi session being handed over to a LTE mode; or
disabling the 5G mode in response to: the device currently participating in an active call session, via VoWiFi or via VoLTE; and VoNR being unsupported by the cellular coverage.

12. A non-transitory storage medium (604) storing instructions that, when executed by at least one processor (602) of a computing system (600) within or associated with a device, cause the computing system (600) to perform a method comprising:
determining (606) a status of an IMS registration on the device;
determining (608) an extent of cellular coverage for the device, said determining the extent of cellular coverage for the device comprising: determining whether or not cellular data is disabled, or determining whether or not VoNR, or ViNR is supported in cellular coverage; and
selectively disabling (610) a 5G mode of the device based on the status of the IMS registration or the extent of cellular coverage,
**characterized in that** the method further comprises selectively enabling the 5G mode in response to:
a level of battery on the device being above a threshold, or WiFi being unavailable while cellular data is on; and any of:
the device being in an idle mode;
a screen of the device being off;
an LTE SIB24 being present; and
the device refraining from foreground scanning of 5G cells while enabling the 5G mode.

13. The non-transitory storage medium of claim 12, wherein the selectively disabling comprises:
disabling the 5G mode of the device in response to a Wi-Fi connection on the device being available and the IMS being registered over a wireless network; or
disabling the 5G mode in response to the cellular coverage being disabled and VoNR being unsupported on the device or on a network through which the device exchanges data.

## Patentansprüche

1. Computersystem-implementiertes Verfahren, wobei das Verfahren von einem Computersystem, das sich in einer Vorrichtung befindet oder damit assoziiert ist, ausgeführt wird und Folgendes umfasst:
Bestimmen (606) eines Status einer Internetprotokoll-Multimediasubsystem- bzw. IMS-Registrierung auf der Vorrichtung;
Bestimmen (608) eines Ausmaßes der zellularen Abdeckung für die Vorrichtung, wobei das Bestimmen des Ausmaßes der zellularen Abdeckung für die Vorrichtung Folgendes umfasst: Bestimmen, ob zellulare Daten deaktiviert sind oder nicht,
oder Bestimmen, ob Voice over New Radio, VoNR, oder Video over New Radio, ViNR, in der zellularen Abdeckung unterstützt wird oder nicht; und
selektives Deaktivieren (610) eines Modus der fünften Generation, 5G, der Vorrichtung basierend auf dem Status der IMS-Registrierung oder dem Ausmaß der zellularen Abdeckung,
**dadurch gekennzeichnet, dass** das computerimplementierte Verfahren ferner umfasst, den 5G-Modus als Reaktion auf Folgendes selektiv zu aktivieren:
ein Batteriepegel auf der Vorrichtung ist über einem Schwellenwert oder
WiFi ist nicht verfügbar, während zellulare Daten eingeschaltet sind; und eines von Folgendem:
die Vorrichtung ist in einem Leerlaufmodus;
ein Bildschirm der Vorrichtung ist ausgeschaltet;
ein LTE-System-Informationsblock 24, SIB24, ist vorhanden; und
die Vorrichtung unterlässt das Vordergrundabtasten von 5G-Zellen, während sie den 5G-Modus aktiviert.

2. Computersystem-implementiertes Verfahren nach Anspruch 1, wobei der 5G-Modus der Vorrichtung einen 5G New Radio Standalone- bzw. NR SA-Modus umfasst.

3. Computersystem-implementiertes Verfahren nach Anspruch 1, wobei das selektive Deaktivieren (610) Folgendes umfasst:
Deaktivieren des 5G-Modus der Vorrichtung als Reaktion darauf, dass eine Wireless Fidelity- bzw. Wi-Fi-Verbindung auf der Vorrichtung verfügbar ist und das IMS über ein drahtloses Netzwerk registriert ist.

4. Computersystem-implementiertes Verfahren nach Anspruch 1, wobei das selektive Deaktivieren (610) Folgendes umfasst:
Deaktivieren des 5G-Modus als Reaktion darauf, dass die zellulare Abdeckung deaktiviert ist und VoNR oder ViNR auf der Vorrichtung oder auf einem Netzwerk, durch das die Vorrichtung Daten austauscht, nicht unterstützt wird.

5. Computersystem-implementiertes Verfahren nach Anspruch 1, wobei das selektive Deaktivieren (610) Folgendes umfasst:
Deaktivieren des 5G-Modus als Reaktion darauf, dass das IMS über WiFi registriert ist und die Vorrichtung gegenwärtig an einer aktiven Anrufsitzung über ein drahtloses Netzwerk teilnimmt.

6. Computersystem-implementiertes Verfahren nach Anspruch 1, wobei das selektive Deaktivieren (610) Folgendes umfasst:
Deaktivieren des 5G-Modus als Reaktion darauf, dass:
die Vorrichtung gegenwärtig an einer aktiven Rufsitzung über Voice Over WiFi, VoWiFi, teilnimmt; und
die VoWiFi-Sitzung an einen Long-Term Evolution- bzw. LTE-Modus übergeben wird.

7. Computersystem-implementiertes Verfahren nach Anspruch 1, wobei das selektive Deaktivieren (610) Folgendes umfasst:
Deaktivieren des 5G-Modus als Reaktion darauf, dass:
die Vorrichtung gegenwärtig an einer aktiven Rufsitzung über VoWiFi oder über Voice Over LTE, VoLTE, teilnimmt;
und
VoNR durch die zellulare Abdeckung nicht unterstützt wird,
wobei das computerimplementierte Verfahren vorzugsweise ferner das Bestimmen eines Vorhandenseins der aktiven Anrufsitzung basierend darauf, dass ein IMS-Anrufaufbau erfolgt, umfasst.

8. Computersystem-implementiertes Verfahren nach Anspruch 1, wobei, dass die Vorrichtung in einem Leerlaufmodus ist, als Reaktion darauf bestimmt wird, dass eine Funkbetriebsmittelsteuerung- bzw. RRC-Verbindung durch das LTE-Netzwerk freigegeben wird.

9. Computersystem (600), das sich in einer Vorrichtung befindet oder damit assoziiert ist, wobei das Computersystem (600) Folgendes umfasst:
einen oder mehrere Prozessoren (602); und
einen Speicher, der Anweisungen speichert, die, wenn sie durch den einen oder die mehreren Prozessoren (602) ausgeführt werden, das Computersystem veranlassen, Folgendes durchzuführen:
Bestimmen eines Status einer IMS-Registrierung auf der Vorrichtung;
Bestimmen eines Ausmaßes der zellularen Abdeckung für die Vorrichtung, wobei das Bestimmen des Ausmaßes der zellularen Abdeckung für die Vorrichtung Folgendes umfasst: Bestimmen, ob zellulare Daten deaktiviert sind oder nicht,
oder Bestimmen, ob VoNR oder ViNR in der zellularen Abdeckung unterstützt wird oder nicht; und
selektives Deaktivieren eines 5G-Modus der Vorrichtung basierend auf dem Status der IMS-Registrierung oder dem Ausmaß der zellularen Abdeckung,
**dadurch gekennzeichnet, dass** die Anweisungen, wenn sie durch den einen oder die mehreren Prozessoren (602) ausgeführt werden, ferner das Computersystem veranlassen, den 5G-Modus selektiv zu aktivieren als Reaktion darauf, dass:
ein Batteriepegel auf der Vorrichtung über einem Schwellenwert ist oder
WiFi nicht verfügbar ist, während zellulare Daten eingeschaltet sind; und eines von Folgendem:
die Vorrichtung ist in einem Leerlaufmodus;
ein Bildschirm der Vorrichtung ist ausgeschaltet;
ein LTE SIB24 ist vorhanden; und
die Vorrichtung unterlässt das Vordergrundabtasten von 5G-Zellen, während sie den 5G-Modus aktiviert.

10. Computersystem (600) nach Anspruch 9, wobei das selektive Deaktivieren Folgendes umfasst:
Deaktivieren des 5G-Modus der Vorrichtung als Reaktion darauf, dass eine Wi-Fi-Verbindung auf der Vorrichtung verfügbar ist und das IMS über ein drahtloses Netzwerk registriert ist.

11. Computersystem (600) nach Anspruch 9, wobei das selektive Deaktivieren Folgendes umfasst:
Deaktivieren des 5G-Modus als Reaktion darauf, dass die zellulare Abdeckung deaktiviert ist und Voice over VoNR auf der Vorrichtung oder auf einem Netzwerk, durch das die Vorrichtung Daten austauscht, nicht unterstützt wird; Deaktivieren des 5G-Modus als Reaktion darauf, dass das IMS über WiFi registriert ist und die Vorrichtung gegenwärtig an einer aktiven Anrufsitzung über ein drahtloses Netzwerk teilnimmt;
Deaktivieren des 5G-Modus als Reaktion darauf, dass: die Vorrichtung gegenwärtig an einer aktiven Rufsitzung über VoWiFi teilnimmt; und die VoWiFi-Sitzung an einen LTE-Modus übergeben wird; oder
Deaktivieren des 5G-Modus als Reaktion darauf, dass: die Vorrichtung gegenwärtig an einer aktiven Rufsitzung über VoWiFi oder über VoLTE teilnimmt; und VoNR durch die zellulare Abdeckung nicht unterstützt wird.

12. Nichttransitorisches Speichermedium (604), das Anweisungen speichert, die, wenn sie durch mindestens einen Prozessor (602) eines Computersystems (600), das sich in einer Vorrichtung befindet oder damit assoziiert ist, ausgeführt werden, das Computersystem veranlassen (600), ein Verfahren durchzuführen, das Folgendes umfasst:
Bestimmen (606) eines Status einer IMS-Registrierung auf der Vorrichtung,
Bestimmen (608) eines Ausmaßes der zellularen Abdeckung für die Vorrichtung, wobei das Bestimmen des Ausmaßes der zellularen Abdeckung für die Vorrichtung Folgendes umfasst: Bestimmen, ob zellulare Daten deaktiviert sind oder nicht,
oder Bestimmen, ob VoNR oder ViNR in der zellularen Abdeckung unterstützt wird oder nicht; und
selektives Deaktivieren (610) eines 5G-Modus der Vorrichtung basierend auf dem Status der IMS-Registrierung oder dem Ausmaß der zellularen Abdeckung,
**dadurch gekennzeichnet, dass** das Verfahren ferner umfasst, den 5G-Modus als Reaktion auf Folgendes selektiv zu aktivieren:
ein Batteriepegel auf der Vorrichtung ist über einem Schwellenwert oder
WiFi ist nicht verfügbar, während zellulare Daten eingeschaltet sind; und eines von Folgendem:
die Vorrichtung ist in einem Leerlaufmodus;
ein Bildschirm der Vorrichtung ist ausgeschaltet;
ein LTE SIB24 ist vorhanden; und
die Vorrichtung unterlässt das Vordergrundabtasten von 5G-Zellen, während sie den 5G-Modus aktiviert.

13. Nichttransitorisches Speichermedium nach Anspruch 12, wobei das selektive Deaktivieren Folgendes umfasst:
Deaktivieren des 5G-Modus der Vorrichtung als Reaktion darauf, dass eine Wi-Fi-Verbindung auf der Vorrichtung verfügbar ist und das IMS über ein drahtloses Netzwerk registriert ist; oder
Deaktivieren des 5G-Modus als Reaktion darauf, dass die zellulare Abdeckung deaktiviert ist und VoNR auf der Vorrichtung oder auf einem Netzwerk, durch das die Vorrichtung Daten austauscht, nicht unterstützt wird.

## Revendications

1. Procédé mis en œuvre par un système informatique, le procédé étant exécuté par un système informatique intégré à un dispositif ou associé à celui-ci, et comprenant les étapes suivantes :
déterminer (606) l'état d'un enregistrement du sous-système multimédia du protocole Internet, IMS, sur le dispositif ;
déterminer (608) l'étendue de la couverture cellulaire pour le dispositif, ladite détermination de l'étendue de la couverture cellulaire pour le dispositif comprenant de déterminer si les données cellulaires sont désactivées, ou non,
ou déterminer si la voix sur New Radio, VoNR, ou la vidéo sur New Radio, ViNR, sont prises en charge dans la couverture cellulaire ; et
désactiver de manière sélective (610) un mode de cinquième génération (5G) du dispositif en fonction de l'état de l'enregistrement IMS ou de l'étendue de la couverture cellulaire,
**caractérisé en ce que** le procédé mis en œuvre par ordinateur comprend en outre l'activation sélective du mode 5G en réponse à :
un niveau de batterie du dispositif supérieur à un seuil,
ou
le WiFi n'étant pas disponible alors que les données cellulaires sont activées ; et l'un quelconque des cas suivants :
le dispositif est en mode veille ;
l'écran du dispositif est éteint ;
un bloc d'informations système LTE 24, SIB24, est présent ; et
le dispositif s'abstient d'effectuer un balayage en avant-plan des cellules 5G tout en activant le mode 5G.

2. Procédé mis en œuvre par un système informatique selon la revendication 1, dans lequel le mode 5G du dispositif comprend un mode 5G New Radio Standalone, NR SA.

3. Procédé mis en œuvre par un système informatique selon la revendication 1, dans lequel la désactivation sélective (610) comprend :
la désactivation du mode 5G du dispositif en réponse à la disponibilité d'une connexion Wi-Fi sur le dispositif et à l'enregistrement de l'IMS sur un réseau sans fil.

4. Procédé mis en œuvre par un système informatique selon la revendication 1, dans lequel la désactivation sélective (610) comprend :
la désactivation du mode 5G en réponse à la désactivation de la couverture cellulaire et à la non-prise en charge de VoNR ou ViNR sur le dispositif ou sur un réseau par lequel le dispositif échange des données.

5. Procédé mis en œuvre par un système informatique selon la revendication 1, dans lequel la désactivation sélective (610) comprend :
la désactivation du mode 5G en réponse à l'enregistrement de l'IMS sur le Wi-Fi et à la participation actuelle du dispositif à une session d'appel active sur un réseau sans fil.

6. Procédé mis en œuvre par un système informatique selon la revendication 1, dans lequel la désactivation sélective (610) comprend :
la désactivation du mode 5G en réponse aux cas suivants :
le dispositif participe actuellement à une session d'appel active, via Voice Over WiFi, VoWiFi ; et
la session VoWiFi est transférée vers un mode Long-Term Evolution, LTE.

7. Procédé mis en œuvre par un système informatique selon la revendication 1, dans lequel la désactivation sélective (610) comprend :
la désactivation du mode 5G en réponse aux cas suivants :
le dispositif participe actuellement à une session d'appel active, via VoWiFi ou via Voice Over LTE, VoLTE ; et
VoNR n'est pas prise en charge par la couverture cellulaire,
de préférence, le procédé mis en œuvre par ordinateur comprenant en outre de déterminer la présence de la session d'appel active sur la base d'un établissement d'appel IMS en cours.

8. Procédé mis en œuvre par un système informatique selon la revendication 1, dans lequel le fait que le dispositif soit en mode veille est déterminé en réponse à une connexion de contrôle des ressources radio, RRC, étant libérée par le réseau LTE.

9. Système informatique (600) intégré à un dispositif ou associé à celui-ci, le système informatique (600) comprenant :
un ou plusieurs processeurs (602) ; et
une mémoire stockant des instructions qui, lorsqu'elles sont exécutées par les un ou plusieurs processeurs (602), amènent le système informatique à :
déterminer un état d'enregistrement IMS sur le dispositif ;
déterminer une étendue de couverture cellulaire pour le dispositif, ladite détermination de l'étendue de la couverture cellulaire pour le dispositif comprenant de déterminer si les données cellulaires sont désactivées, ou non,
ou déterminer si VoNR ou ViNR sont prises en charge, ou non, dans la couverture cellulaire ;
et désactiver de manière sélective un mode 5G du dispositif en fonction de l'état de l'enregistrement IMS ou de l'étendue de la couverture cellulaire,
**caractérisé en ce que** les instructions, lorsqu'elles sont exécutées par les un ou plusieurs processeurs (602), amènent en outre le système informatique à activer de manière sélective le mode 5G en réponse à :
un niveau de batterie sur le dispositif supérieur à un seuil, ou
le WiFi non disponible alors que les données cellulaires sont activées ; et l'un quelconque des cas suivants :
le dispositif est en mode veille ;
l'écran du dispositif est éteint ;
un LTE SIB24 est présent ; et
le dispositif s'abstient d'effectuer un balayage en avant-plan des cellules 5G tout en activant le mode 5G.

10. Système informatique (600) selon la revendication 9, dans lequel la désactivation sélective comprend :
la désactivation du mode 5G du dispositif en réponse à la disponibilité d'une connexion Wi-Fi sur le dispositif et à l'enregistrement de l'IMS sur un réseau sans fil.

11. Système informatique (600) selon la revendication 9, dans lequel la désactivation sélective comprend :
la désactivation du mode 5G en réponse à la désactivation de la couverture cellulaire et à la non-prise en charge de VoNR sur le dispositif ou sur un réseau par lequel le dispositif échange des données ;
la désactivation du mode 5G en réponse à l'enregistrement de l'IMS sur le Wi-Fi et à la participation actuelle du dispositif à une session d'appel active sur un réseau sans fil ;
la désactivation du mode 5G en réponse aux cas suivants :
le dispositif participe actuellement à une session d'appel active, via Voice Over WiFi, VoWiFi ; et
la session VoWiFi est transférée vers un mode Long-Term Evolution, LTE ; ou
la désactivation du mode 5G en réponse aux cas suivants : le dispositif participe actuellement à une session d'appel active, via VoWiFi ou via VoLTE ; et la VoNR n'est pas prise en charge par la couverture cellulaire.

12. Support de stockage non transitoire (604) stockant des instructions qui, lorsqu'elles sont exécutées par au moins un processeur (602) d'un système informatique (600) au sein d'un appareil ou associé à celui-ci, amènent le système informatique (600) à exécuter un procédé comprenant les étapes suivantes :
déterminer (606) un état d'enregistrement IMS sur le dispositif ;
déterminer (608) une étendue de couverture cellulaire pour le dispositif, ladite détermination de l'étendue de la couverture cellulaire pour le dispositif comprenant de déterminer si les données cellulaires sont désactivées, ou non,
ou déterminer si VoNR ou ViNR sont prises en charge, ou non, dans la couverture cellulaire ; et
désactiver de manière sélective (610) un mode 5G du dispositif en fonction de l'état de l'enregistrement IMS ou de l'étendue de la couverture cellulaire,
**caractérisé en ce que** le procédé comprend en outre l'activation sélective du mode 5G en réponse à :
un niveau de batterie sur le dispositif supérieur à un seuil, ou
le WiFi non disponible alors que les données cellulaires sont activées ; et l'un quelconque des cas suivants :
le dispositif est en mode veille ;
l'écran du dispositif est éteint ;
un LTE SIB24 est présent ; et
le dispositif s'abstient d'effectuer un balayage en avant-plan des cellules 5G tout en activant le mode 5G.

13. Support de stockage non transitoire selon la revendication 12, dans lequel la désactivation sélective comprend :
la désactivation du mode 5G du dispositif en réponse à la disponibilité d'une connexion Wi-Fi sur le dispositif et à l'enregistrement de l'IMS sur un réseau sans fil ; ou
la désactivation du mode 5G en réponse à la désactivation de la couverture cellulaire et à la non-prise en charge de VoNR sur le dispositif ou sur un réseau par lequel le dispositif échange des données.
